# EUROPEAN PATENT SPECIFICATION

(11) **EP 1 504 575 B1**
(45) Date of publication and mention of the grant of the patent: **18.10.2006**
(21) Application number: 03719026.1
(22) Date of filing: 25.04.2003
(51) Int. Cl.: H04L 12/58, H04Q 7/22, H04N 1/32, H04N 1/00, H04L 29/06

(54) **MULTIMEDIA MESSAGING METHOD AND SYSTEM USING WATERMARKS**
VERFAHREN UND VORRICHTUNG ZUR NUTZUNG VON WASSERZEICHEN IN MULTIMEDIA BOTSCHAFTEN
PROCEDE ET SYSTEME DE MESSAGERIE MULTIMEDIA FAISANT APPEL A DES FILIGRANES NUMERIQUES

(30) Priority: 01.05.2002 EP 02076701
(43) Date of publication of application: 09.02.2005
(73) Proprietor: Koninklijke Philips Electronics N.V., 5621 BA Eindhoven (NL)
(72) Inventor: ZUIDEMA, Edwin, NL-5656 AA Eindhoven (NL)
(74) Representative: Groenendaal, Antonius W. M.
(86) International application number: PCT/IB2003/001847
(87) International publication number: WO 2003/094457

(56) References cited:
- EP-A- 1 043 671
- EP-A- 1 063 833
- HARTUNG F ET AL: "DIGITAL RIGHTS MANAGEMENT AND WATERMARKING OF MULTIMEDIA CONTENT FOR M-COMMERCE APPLICATIONS" IEEE COMMUNICATIONS MAGAZINE, IEEE SERVICE CENTER. PISCATAWAY, N.J, US, vol. 38, no. 11, November 2000 (2000-11), pages 78-84, XP000969744 ISSN: 0163-6804

## Description

The invention relates to a method of controlling retransmission of a content item contained in a multimedia message. The invention further relates to a system arranged for controlling retransmission of a content item contained in a multimedia message.

Multimedia Messaging Service (MMS) is a standard that lets users send and receive multimedia messages with formatted text, graphics, audio and video clips. MMS messages can be sent to (MMS enabled) mobile phones or standard e-mail addresses. The sending entity can for instance be a mobile phone or an application running on a computer.

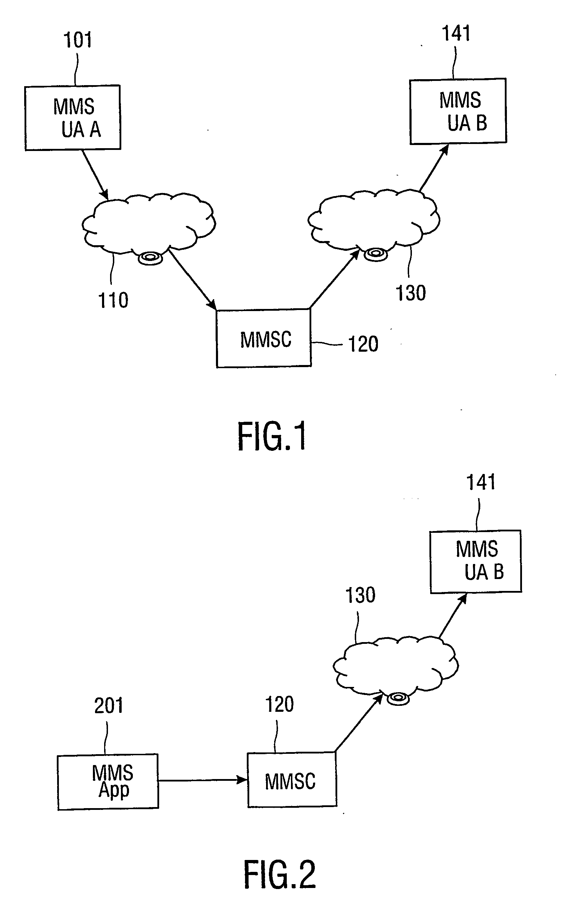

Fig. 1 shows the generic MMS Person-to-Person flow. A first person wants to send an MMS message to a second person. He takes his mobile phone 101 or other MMS user agent, composes the message and includes one or more multimedia objects in the message. After hitting the "send" button, the multimedia message (text and the multimedia objects) is transmitted over a mobile network 110 to a Multimedia Messaging Service Center (MMSC) 120.

The mobile network 110 could be e.g. GSM, GPRS, UMTS or a comparable system. As multimedia messages can potentially grow very big, a broadband mobile network is preferred. The first person could also have composed the message on his personal computer connected to the Internet. The message would then have been sent to the MMSC 120 over the Internet. Other ways to transmit multimedia messages are of course also possible. It is important to note that the message is always sent to the MMSC 120 and not directly to the recipient. This architecture is an example of a store-and-forward messaging system.

The multimedia message is received by the MMSC 120. From there it is forwarded to the intended recipient (the second person). The multimedia message is once more transmitted over a mobile network 130, this time to the mobile telephone or other user agent 141 of the second person. Upon arrival of the multimedia message, this mobile telephone processes the content and presents the message to the second person. The two mobile networks 110, 130 in question may or may not be the same.

In the above example, the first person used the second person's telephone number as the address to which the multimedia message was to be sent. He could also have used the second person's e-mail address. The multimedia message would then have been forwarded by the MMSC 120 to the second person's e-mail box, from which the second person could have read it using a standard e-mail client.

Fig. 2 shows the generic MMS Application-to-Person flow. Multimedia messaging is of course not restricted to messages sent by persons to persons. Many automated services can be offered. For instance, a popular service is the making available of ringtones or logos for mobile telephones. In such an application, a user can send a request for a particular ringtone or logo to a server from his mobile telephone. An application 201 on the server retrieves the appropriate ringtone or logo and transmits it as a multimedia message to the MMSC 120. Once the message arrives at the MMSC 120, it is handled and forwarded in the same way as described above with reference to Fig. 1. When the mobile phone 141 receives the multimedia message, it extracts the ringtone or logo.

Delivering ringtones and logos is already very popular with the standard text-based Short Messaging Service (SMS). However, MMS has a much broader application. A potential use of Application-to-Person MMS is the provision of (high) value content. An example could be a service which can provide the latest music samples or video clips. The user pays an extra amount for that message to cover the content licensing costs, as most of this content is copyrighted or protected by other intellectual property rights.

A problem occurs if both presented models are combined: The user who paid for the content (application-to-person) can forward this message (and thus the content) to another user (person-to-person), only paying for the transmission of the message, but not paying any license fees due for forwarding the content.

Patent application EP-A-1 063 833 suggest the disabling of the retransmission of watermarked data by filtering means.

It is an object of the invention to be able to restrict or otherwise control the forwarding of multimedia content.

This object is achieved according to the invention in a method as claimed in claim 1, and in a system as claimed in claim 8. Basically, the invention proposes "tagging" the content transmitted in a multimedia message with a watermark before sending it to the recipient. Preferably, such tagging is done in the store-and-forward component of the system. In the system as described above this would be the MMSC 120.

Restricting forwarding, for example by disallowing retransmission of the entire message, or by allowing retransmission of the message but disallowing retransmission of the content item, is usually desired. Another option is to allow forwarding of the content item and tracking such forwarding. By tracking the content, useful information about the distribution of the content can be gathered (for marketing purposes), but also business rules can be added to limit this distribution of the content. Yet another option is to contact the service provider who originally provided the content item and to allow or disallow forwarding based on the response.

Advantageous embodiments are set out in the dependent claims.

These and other aspects of the invention will be apparent from and elucidated with reference to the embodiments shown in the drawing, in which:
Fig. 1 schematically illustrates a multimedia messaging system in which messages from one user are passed via an MMSC to another user;
Fig. 2 schematically illustrates a multimedia messaging system in which messages from an application are passed via the MMSC to a user;
Fig. 3 schematically illustrates an preferred embodiment of the invention in which a watermark embedder is added to the MMSC;
Fig. 4 schematically illustrates an embodiment of the invention in which a watermark detector is added to the MMSC;
Fig. 5 schematically illustrates a Media Mediation System coupled to the MMSC; and
Fig. 6 schematically illustrates an embodiment of the MMSC.

Throughout the figures, same reference numerals indicate similar or corresponding features. Some of the features indicated in the drawings are typically implemented in software, and as such represent software entities, such as software modules or objects.

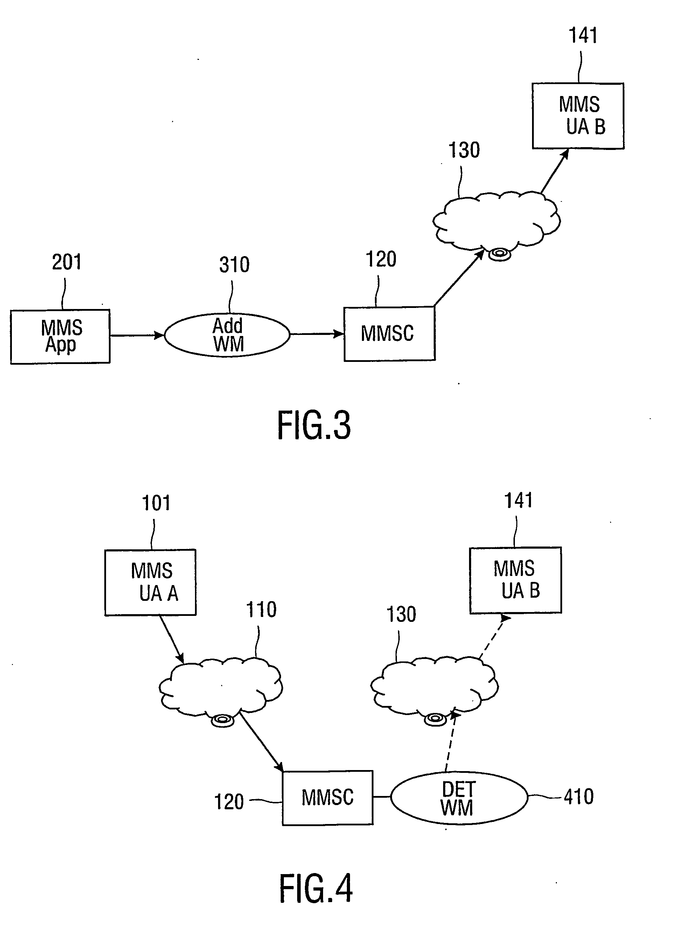

An illustration of a preferred embodiment of the invention is shown in Fig. 3. In this embodiment, the MMSC 120 is extended with a watermarking system 130 through which all content present in multimedia messages must pass. The watermarking system 130 detects the type of content in the multimedia messages (e.g. audio, video, text and so on), chooses an appropriate watermarking scheme for the detected type of content, and embeds a marker in the content using the chosen watermarking scheme. Preferably this is done only if the source of the multimedia message is the MMS application 201. This way content generated by the user agent 101 and sent to the user agent 141 will not be affected.

The marker does not have to be very big, and does not need to contain a lot of information. As will become apparent below, the most important aspect is that it is possible later to determine that the content has been watermarked. The content of the watermark is not very important, but it must be very difficult or impossible to remove a watermark from the content. This makes robust watermarking techniques the best choice, as they typically have a low payload but are very difficult to remove.

Of course it is not forbidden to add meaningful content as the payload of the watermark. For example, the name of the entity that added the watermark, or an identifier for the recipient of the multimedia message could be embedded. An identifier for the provider of MMS application 201 could also be embedded, for example as a randomly chosen number that is then stored in a database and associated with the identity of the provider.

The MMSC 120 is also provided with a watermark detector, as shown in Fig. 4. Before adding a watermark, the content of the multimedia message is passed through the watermark detector 410. If a marker can be found, this indicates that the content has passed through an MMSC previously. This is proof that the content is being forwarded. As such forwarding is to be prevented or at least restricted, the MMSC 120 can now take appropriate action.

The simplest action is to simply delete the multimedia message rather than forwarding it. However, this may not be acceptable to users. Usually one part of the message (such as a picture or ringtone) represents forwarded content. Other parts, such as accompanying text messages or pictures, are original content. The original content should not be blocked simply because there is also a forwarded part in the message. The MMSC 120 could strip out this forwarded piece of content and pass on the remaining parts of the multimedia message. Preferably, any parts that have been stripped out are replaced by a message indicating that they have been stripped out and why.

Alternatively, a license fee required for forwarding the content could be computed. This license fee can then be charged to the sending user's account, if this information is available. This could work well e.g. with music content, as music rights clearinghouses are available to negotiate a general compensation or license fee.

The MMSC 120 could also convert the content to a relatively low quality version before forwarding the content to the intended recipient. This way, the intended recipient would still get the message and the content, but because of the low quality it would not be very valuable. He would then be encouraged to download the original version from the MMS application 201 himself.

The action can also comprise reporting the distribution of this content to a third party such as the service provider. Distribution can then be made conditional upon approval from the provider. This embodiment works best if an identifier for the provider is embedded in the content item.

Another example is the allowance of the forwarding, but billing the sending user a premium price for it. In mobile networks, the sending user can be identified e.g. through the telephone number to allow such billing. Price information can be appended to the message or be supplied in a separate message.

If a meaningful payload is present in the watermark, the watermark detector 410 can extract this payload and take appropriate action based on the extracted information. For example, if the extracted information identifies the initial recipient of the content being forwarded (i.e. the person who received it from the MMS application server in Fig. 2), the MMSC 120 could compare this identifier against an identifier for the sender of the intercepted multimedia message. If these two are the same, it could permit forwarding. This way, the initial recipient can forward content to his friends, but those friends cannot pass the message on to anyone else.

Alternatively, the identifier could be used to track down the initial recipient of the content, so that he can be charged a fine, or so that he can be blocked from using the MMS application.

If the extracted information identifies the MMSC which added the watermark, or the operator of one or more MMSCs, the MMSC 120 could allow forwarding of the message if it were the same MMSC as the MMSC which added the watermark. This permits forwarding only to and from users of the same MMSC.

The watermarking system 310 and the watermark detector 410 can be embodied as separate devices to be installed in the MMSC 120, or as separate devices connected to the MMSC 120. For example, the system 310 could be designed to operate as a proxy to be connected between MMS application 201 and MMSC 120, making operation transparent. Similarly, the detector 410 can be designed as a proxy between MMSC 120 and mobile network 130. The devices 310, 410 can be embodied as one single device. They can be embodied in whole or in part in hardware or in software.

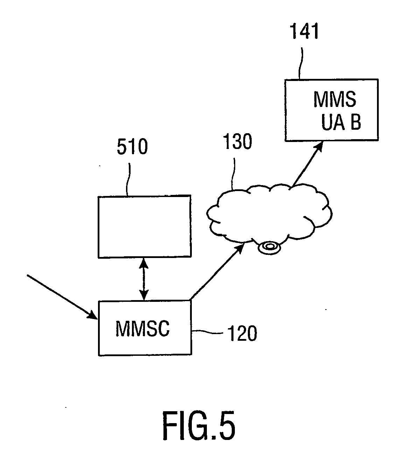

The entity operating the MMSC 120 is able to optimize content at the MMSC 120 for the receiving user agent using media mediation system 510, as shown schematically in Fig. 5. Optimization can be the adaptation or transcoding of the format (for images e.g., GIF to JPEG), the size (for video e.g., from CIF to QCIF), the bitrate (for audio e.g., 128kbps to 20kbps) and other parameters. Since this media mediation system 510 has access to, and knowledge about the multimedia content of the message, the watermark embedding and detection systems 310, 410 are then preferably positioned in this system 510.

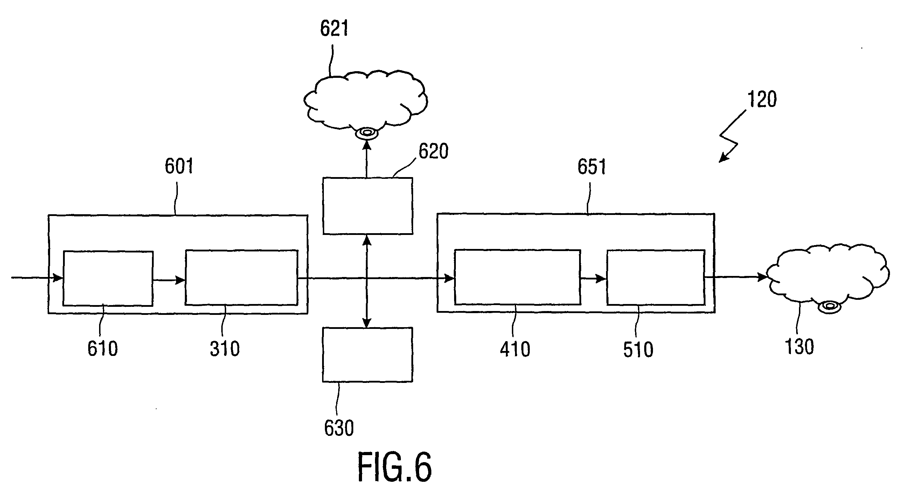

An illustrative embodiment of the MMSC 120 is shown schematically in Fig. 6. The functionality of the MMSC 120 can be divided conceptually into a server portion 601 and a relay portion 651. Briefly speaking, the server portion 601 provides the store-and-forward architecture and the relay portion 651 transcodes and delivers the messages.

A message is received by the receiver component 610 of the server 601. The message is processed to detect how it should be handled and to whom it should be forwarded. In accordance with the invention, the contents of the message is processed by the watermark detector 310 to detect whether the multimedia content of the message has already been forwarded. If such detection is positive, the MMSC 120 takes appropriate action, as explained above.

If forwarding of the message is acceptable, there are several possible paths the message can take. Usually the message will be passed on to the relay 651. The relay 651 comprises the watermark embedder 410 and the media mediation system 510 which transcodes the message to a form suitable for handling by the recipient. The message is then passed on to the mobile network 130 so that it can be delivered to the intended recipient.

The message can also be passed on to an SMTP interface 620 connected to a network 621 such as the Internet. This interface formats the multimedia message in accordance with Internet e-mail standards, and then forwards the message as an Internet e-mail message to the intended recipient. The SMTP interface 620 may or may not embed a watermark in the multimedia message before forwarding it. If the SMTP interface 620 watermarks the content, further forwarding of the resulting e-mail message to another recipient via the MMS network becomes impossible. However, as the Internet e-mail network is not very strictly regulated, it will be very difficult to enforce forwarding restrictions over the e-mail network itself.

If the recipient is not on the same mobile network as the sender of the multimedia message, the relay cannot forward the message itself to the intended recipient. In this case, the server passes the message on to an MMSC 630 which is connected to the correct mobile network. It is then the responsibility of this other MMSC 630 to embed the appropriate watermark before forwarding the multimedia message to the intended recipient.

The watermark detector 410 can also be positioned in the relay portion 651 of the MMSC 120. This has the advantage that the detector 410 and embedder 310 could e.g. be realized as a single device. However, if a particular multimedia message is then passed on to another MMSC which does not have a watermark detector in accordance with the invention, there is a risk that the content is forwarded multiple times, which is not permitted.

Watermark embedding can also be implemented as part of the transcoder module 510. Content received by an MMSC from an MMS application will often be of relatively high quality. As most mobile devices will not be able to directly handle such high quality content (due to e.g. low resolution displays, low quality loudspeakers or headphones), transcoding to a format suitable for the mobile device is necessary.

By making the watermark embedding part of the transcoding process, one can make sure that the watermark survives the destructive operations associated with the transcoding process. For example, if a 24-bit picture in the TIFF format is converted to an 8-bit grayscale GIF image, a watermark that is embedded in the color components of the original image can be severely distorted. If however, the watermark were embedded after the conversion to 8-bit grayscale but before the compression to the GIF format, the final picture will be correctly watermarked.

The functionality of the transcoding module 510 can be extended to more than just converting between formats, sizes, bitrates etcetera. For instance, an interface with MMS applications could be provided. This way, an MMS application could for instance dynamically generate content specifically adapted for one particular mobile device.

It should be noted that the above-mentioned embodiments illustrate rather than limit the invention, and that those skilled in the art will be able to design many alternative embodiments without departing from the scope of the appended claims. The invention is of course applicable to any store-and-forward system, not just the MMS system described above. For example, the watermark embedder 310 and detector 410 could be incorporated in the user agents 101, 141.

It is for instance also possible to implement the watermark detection and embedding functionality according to the invention in an Internet or Intranet e-mail server system. This way e-mail messages cannot be used to indefinitely forward multimedia content. Analysis of the contents of e-mail attachments is already done by anti-virus software, and a similar approach could be used to implement watermark detection in attachments.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In the device claim enumerating several means, several of these means can be embodied by one and the same item of hardware. The mere fact that certain measures are recited in mutually different dependent claims does not indicate that a combination of these measures cannot be used to advantage.

## Claims

1. A method of controlling retransmission of a content item contained in a multimedia message, the message originating with a sender which received the content item from a provider, comprising:
- receiving the message containing the content item from the sender together with an identifier of an intended recipient of the message;
- processing the content item to detect the presence or absence of a watermark therein;
- if the absence of a watermark has been detected,
- causing a watermark to be embedded in the content item, and
- allowing retransmission of the message including the watermarked content item to the intended recipient;
and otherwise controlling retransmission of the message including the content item to the intended recipient.

2. The method as claimed in claim 1, in which controlling retransmission comprises allowing retransmission of the message including the watermarked content item to the intended recipient and billing the sender a premium price.

3. The method as claimed in claim 1, in which controlling retransmission comprises allowing retransmission of the message including the watermarked content item to the intended recipient and recording details regarding the retransmission.

4. The method as claimed in claim 1, in which controlling retransmission comprises restricting retransmission of the message.

5. The method as claimed in claim 4, in which restricting retransmission comprises disallowing retransmission of the message.

6. The method as claimed in claim 4, in which restricting retransmission comprises allowing retransmission of the message but disallowing retransmission of the content item.

7. The method as claimed in claim 4, 5 or 6, in which retransmission is conditional upon approval by a provider of the content item.

8. A system arranged for controlling retransmission of a content item contained in a multimedia message, the message originating with a sender which received the content item from a provider, comprising:
- receiving means for receiving the message containing the content item from the sender together with an identifier of an intended recipient of the message,
- watermark detecting means for processing the content item to detect the presence or absence of a watermark therein, and for signaling to conditional retransmitting means the presence or absence of a watermark,
- the conditional retransmitting means being arranged for, conditional upon receiving a signal indicating the absence of a watermark,
- activating watermarking means for embedding a watermark in the content item, and
- activating retransmitting means for retransmitting the message including the watermarked content item to the intended recipient,
and for otherwise controlling retransmission of the message including the content item to the intended recipient.

9. A media transcoding system, arranged for transcoding content items in a multimedia message to a format suitable for an intended recipient, comprising the system of claim 8.

10. A computer program product arranged for causing a processor to execute the method of claim 1.

## Patentansprüche

1. Verfahren zum Steuern der Weiterübertragung eines Inhaltselements, das in einer Multimedia-Botschaft enthalten ist, wobei die Botschaft von einem Absender ausgeht, der das Inhaltselement von einem Provider empfangen hat, das Folgendes umfasst:
- Empfangen der Botschaft, die das Inhaltselement umfasst, vom Absender, zusammen mit einer Kennung eines beabsichtigten Empfängers der Botschaft;
- Verarbeiten des Inhaltselements, um das Vorhandensein oder die Abwesenheit eines Wasserzeichens darin zu ermitteln;
- wenn die Abwesenheit eines Wasserzeichens ermittelt wurde,
- Bewirken, dass ein Wasserzeichen in das Inhaltselement eingebettet wird, und
- Ermöglichen der Weiterübertragung der Botschaft, die das mit einem Wasserzeichen versehene Inhaltselement umfasst, an den beabsichtigten Empfänger;
und andernfalls Steuern der Weiterübertragung der Botschaft, die das Inhaltselement umfasst, an den beabsichtigten Empfänger.

2. Verfahren nach Anspruch 1, wobei das Steuern der Weiterübertragung das Ermöglichen der Weiterübertragung der Botschaft, die das mit einem Wasserzeichen versehene Inhaltselement umfasst, an den beabsichtigten Empfänger und das Inrechnungstellen eines Aufpreises an den Absender umfasst.

3. Verfahren nach Anspruch 1, wobei das Steuern der Weiterübertragung das Ermöglichen der Weiterübertragung der Botschaft, die das mit einem Wasserzeichen versehene Inhaltselement umfasst, an den beabsichtigten Empfänger und das Aufzeichnen von Details, die die Weiterübertragung betreffen, umfasst.

4. Verfahren nach Anspruch 1, wobei das Steuern der Weiterübertragung das Einschränken der Weiterübertragung der Botschaft umfasst.

5. Verfahren nach Anspruch 4, wobei das Einschränken der Weiterübertragung das Verweigern der Weiterübertragung der Botschaft umfasst.

6. Verfahren nach Anspruch 4, wobei das Einschränken der Weiterüberagung das Ermöglichen der Weiterübertragung der Botschaft aber das Verweigern der Weiterübertragung des Inhaltselements umfasst.

7. Verfahren nach Anspruch 4, 5 oder 6, wobei die Weiterübertragung abhängig von der Genehmigung durch einen Provider des Inhaltselements ist.

8. Vorrichtung zum Steuern der Weiterübertragung eines Inhaltselements, das in einer Multimedia-Botschaft enthalten ist, wobei die Botschaft von einem Absender ausgeht, der das Inhaltselement von einem Provider empfangen hat, die Folgendes umfasst:
- Empfangsmittel zum Empfangen der Botschaft, die das Inhaltselement umfasst, vom Absender, zusammen mit einer Kennung eines beabsichtigten Empfängers der Botschaft,
- Wasserzeichen-Detektionsmittel zum Verarbeiten des Inhaltselements, um das Vorhandensein oder die Abwesenheit eines Wasserzeichens darin zu ermitteln, und zum Signalisieren des Vorhandenseins oder der Abwesenheit eines Wasserzeichens an die Mittel zur bedingten Weiterübertragung,
- wobei die Mittel zur bedingten Weiterübertragung eingerichtet sind, um abhängig vom Empfang eines Signals, das die Abwesenheit eines Wasserzeichens anzeigt,
- Mittel zum Versehen mit einem Wasserzeichen zum Einbetten eines Wasserzeichens im Inhaltselement zu aktivieren, und
- Weiterübertragungsmittel zum Weiterübertragen der Botschaft, die das mit einem Wasserzeichen versehene Inhaltselement umfasst, an den beabsichtigten Empfänger, zu aktivieren,
und andernfalls Steuern der Weiterübertragung der Botschaft, die das Inhaltselement umfasst, an den beabsichtigten Empfänger.

9. Medienumcodierungsvorrichtung, die eingerichtet ist, um Inhaltselemente in einer Multimedia-Botschaft in ein Format umzucodieren, das für einen beabsichtigten Empfänger geeignet ist, die die Vorrichtung von Anspruch 8 umfasst.

10. Computerprogrammprodukt, das eingerichtet ist, um zu bewirken, dass ein Prozessor das Verfahren von Anspruch 1 ausführt.

## Revendications

1. Procédé de contrôle de la retransmission d'un élément de contenu contenu dans un message multimédia, le message provenant d'un émetteur qui a reçu l'élément de contenu d'un fournisseur, comprenant:
- la réception du message contenant l'élément de contenu provenant de l'émetteur ainsi qu'un identifiant d'un destinataire prévu du message;
- le traitement de l'élément de contenu pour y détecter la présence ou l'absence de filigrane;
- si l'absence d'un filigrane a été détectée,
- réaliser l'insertion d'un filigrane dans l'élément de contenu, et
- permettre la retransmission du message incluant l'élément de contenu doté du filigrane au destinataire prévu;
et sinon, de contrôle de la retransmission du message incluant l'élément de contenu au destinataire prévu.

2. Procédé selon la revendication 1, dans lequel le contrôle de la retransmission comprend la permission de la retransmission du message incluant l'élément de contenu doté du filigrane au destinataire prévu et la facturation à l'émetteur d'une redevance.

3. Procédé selon la revendication 1, dans lequel le contrôle de la retransmission comprend la permission de la retransmission du message incluant l'élément de contenu doté du filigrane au destinataire prévu et l'enregistrement de détails concernant la retransmission.

4. Procédé selon la revendication 1, dans laquelle le contrôle de la retransmission comprend la restriction de la retransmission du message.

5. Procédé selon la revendication 4, dans lequel la restriction de la retransmission comprend l'interdiction de la retransmission du message.

6. Procédé selon la revendication 4, dans lequel la restriction de la retransmission comprend la permission de la retransmission du message mais l'interdiction de la retransmission de l'élément de contenu.

7. Procédé selon la revendication de 4, 5 ou 6, dans lequel la retransmission est conditionnée par l'approbation par un fournisseur de l'élément de contenu.

8. Système aménagé pour contrôler la retransmission d'un élément de contenu contenu dans un message multimédia, le message étant originaire d'un émetteur qui a reçu l'élément de contenu d'un fournisseur, comprenant:
- des moyens de réception pour recevoir le message contenant l'élément de contenu provenant de l'émetteur ainsi qu'un identifiant d'un destinataire prévu du message,
- des moyens de détection de filigrane pour traiter l'élément de contenu pour y détecter la présence ou l'absence d'un filigrane, et pour signaler à des moyens de retransmission conditionnelle la présence ou l'absence d'un filigrane,
- les moyens de retransmission conditionnelle étant aménagés pour, sous condition de réception d'un signal indiquant l'absence d'un filigrane,
- activer les moyens de filigranage pour insérer un filigrane dans l'élément de contenu, et
- activer les moyens de retransmission pour retransmettre le message incluant l'élément de contenu doté du filigrane au destinataire prévu,
et sinon, pour contrôler la retransmission du message incluant l'élément de contenu au destinataire prévu.

9. Système de transcodage de média, aménagé pour transcoder des éléments de contenu dans un message multimédia dans un format approprié pour un destinataire prévu, comprenant le système selon la revendication 8.

10. Produit de programme d'ordinateur aménagé pour amener un processeur à exécuter le procédé selon la revendication 1.
